# EUROPÄISCHE PATENTSCHRIFT

(11) **EP 1 443 843 B1**
(45) Veröffentlichungstag und Bekanntmachung des Hinweises auf die Patenterteilung: **26.01.2011**
(21) Anmeldenummer: 02803005.4
(22) Anmeldetag: 11.11.2002
(51) Int. Cl.: A47L 9/12, A47L 9/20, A47L 7/08

(54) **REINIGUNGSGER T**
PURIFICATION UNIT
APPAREIL EPURATEUR

(30) Priorität: 17.11.2001 DE 10156696
(43) Veröffentlichungstag der Anmeldung: 11.08.2004
(73) Patentinhaber: HBW-Gubesch Kunststoff-Engineering GmbH, 91489 Wilhelmsdorf (DE)
(72) Erfinder: WIRTH, Herbert, 96050 Bamberg (DE)
(74) Vertreter: Eichstädt, Alfred
(86) Internationale Anmeldenummer: PCT/EP2002/012570
(87) Internationale Veröffentlichungsnummer: WO 2003/041553

(56) Entgegenhaltungen:
- EP-A- 0 657 631
- EP-A- 0 873 775
- DE-A- 2 631 260
- DE-A- 3 413 214
- DE-C- 4 230 667
- US-A- 5 343 592
- US-A- 5 481 780

## Beschreibung

Die Erfindung betrifft ein Reinigungsgerät. Reinigungsgeräte im Sinne der Erfindung sind beispielsweise Staubsauger, Luftreinigungsgeräte und Klimatisierungsgeräte.

Bei herkömmlichen Staubsaugern werden über einen Eingangskanal, in welchem ein Düsen-/Schlauchsystem vorgesehen ist, Schmutzpartikel durch Ansaugen in einen luftdurchströmten Staubsaugerbeutel befördert und dort zurückgehalten. Die Größe der zurückgehaltenen Schmutzpartikel ist von der Porengröße des Staubsaugerbeutels abhängig. Schmutzpartikel, die kleiner sind als die Porengröße des Staubsaugerbeutels, verbleiben in der aus dem Staubsauger austretenden Luft. Folglich schweben in dem Raum, in welchem der Staubsauger benutzt wird, eine Vielzahl kleiner Schmutzpartikel. In dieser aus dem Staubsauger austretenden Luft sind im allgemeinen auch allergieauslösende Stoffe vorhanden. Zu diesen gehören beispielsweise Proteine, Proteinbestandteile und Elektrolyte, die im Speichel von Tierhaaren enthalten sind.

Es sind auch bereits Staubsauger bekannt, bei denen die ausströmende Luft ein weiteres Filter passieren, mittels dessen eine zusätzliche Reinigung der Luft erreicht wird. Bei Staubsaugern für Allergiker ist dieses weitere Filter aufwendig gestaltet.

Staubsauger für Allergiker müssen gemäß den Anforderungen, die von der Gesellschaft für Umwelt- und Innenraumanalytik formuliert wurden, derart ausgestaltet sein, dass sie aus der Luft Pollen, Schimmelpilze, Bakterien, Allergene und Feinstäube, die kleiner gleich 10 Mikrometer sind, ausfiltern können.

Es sind auch bereits Staubsauger bekannt, die als Filter einen teilweise mit Wasser gefüllten Wasserbehälter verwenden.

Ein derartiges Gerät ist beispielsweise Gegenstand der US-A-5,343,592. Das dort beschriebene Gerät weist einen Wasserbehälter, einen in den Wasserbehälter geführten Eingangskanal, einen aus dem Wasserbehälter geführten Ausgangskanal, eine im Ausgangskanal angeordnete Filtervorrichtung und eine im Ausgangskanal enthaltene Vakuumpumpe auf. Bei der genannten Filtervorrichtung handelt es sich um ein in einem durchbohrten Filterhalter gelagertes offenporiges Filterelement, welches als Urethan-Filterelement oder als elektrostatisch geladenes Allergiefilter ausgestaltet ist. Diese Filtervorrichtung ist dazu vorgesehen, Verunreinigungen auszufiltern, deren Größe im Submikrobereich liegt.

Die Nachteile derartiger Filtervorrichtungen bestehen darin, dass sich die zurückgehaltenen Partikel in der Filterschicht ablagern. Dies führt dazu, dass anfangs noch viele Partikel die Filtervorrichtung passieren, mit zunehmender Zeit jedoch mehr und mehr Partikel im Filter hängen bleiben. Dadurch wird das Durchlassverhalten des Filters in nicht mehr kontrollierbarer Weise verändert. Die zurückgehaltenen Partikel bilden ein Sekundärfilter. Der Strömungsdruckverlust wird immer höher, je dichter das Filter mit hängengebliebenen Partikeln besetzt ist. Insbesondere dann, wenn eine leistungsfähige Vakuumpumpe vorliegt, kommt es zu Durchbrüchen. Die nutzbare Filtrationszeit ist abhängig von der Filtergröße, dem Schmutzaufnahmevermögen, der Staubkonzentration und dem tolerablen Strömungsdruckverlust.

Aus der EP 0 873 775 A1 ist ein aus Keramik bestehendes Abgasfilter für ein Fahrzeug bekannt. Das Keramikfilter ist mit einer Heizvorrichtung verbunden, die zur Verbrennung von im Abgas enthaltenen Partikeln vorgesehen ist.

Der Erfindung liegt die Aufgabe zugrunde, ein neues Reinigungsgerät anzugeben, das den Bedürfnissen von Allergikern besser gerecht wird als die bekannten Reinigungsgeräte.

Diese Aufgabe wird durch ein Reinigungsgerät mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass mittels der beanspruchten Heizvorrichtung das allergieauslösende Stoffe zurückhaltende Keramikfilter durch ein Ausheizen von organischen Partikeln gereinigt bzw. sterilisiert werden kann. Zu diesem Zweck müssen mittels der Heizvorrichtung Temperaturen erzeugt werden, die mindestens im Bereich von 500°C liegen. Das als Filter verwendete Keramikmaterial toleriert derart hohe Temperaturen im Gegensatz zu den bekannten Filtern auf Kunststoffbasis oder den elektrostatisch geladenen Filtern ohne weiteres.

Weiterhin wird durch die Erfindung erreicht, dass das Durchlassverhalten des Filters über einen langen 3etriebszeitraum nahezu konstant gehalten werden kann, da im Keramikfilter hängen gebliebene Teilchen durch eine regelmäßige Sterilisation des Filters entfernt werden können. Im Rahmen dieser Sterilisation werden insbesondere allergieauslösende organische Partikel wie Proteine, Proteinbestandteile und Elektrolyte verascht und die entstandenen Ascheteilchen im Abluftstrom ausgegeben. Eine derartige Vernichtung allergieauslösender Partikel ist für Allergiker von großem Vorteil.

Ferner haben Untersuchungen ergeben, dass Keime durch Poren wandern können, deren Durchmesser deutlich kleiner ist als die Größe der Keime. Auch derartige Keime, die sich in einem feuchten Milieu besonders gut weiter entwickeln, werden durch die Erfindung abgetötet.

Ein weiterer Vorteil der Erfindung besteht in einem verringerten Wartungsaufwand, da es sich bei Keramikfiltern um Dauerfilter handelt, die auch "inline" thermisch gereinigt werden können. Dies kann auch ohne ein Herausnehmen des Filters aus dem Gerät und auch völlig automatisch erfolgen.

Die Vorteile der Verwendung der Merkmale der Ansprüche 2 und 3 bestehen darin, dass durch das erste Filter das Wasserbad passierende größere Teilchen und Tröpfchen zurückgehalten werden, die das nachfolgende zweite Filter in seiner Funktion beeinträchtigen könnten. Weiterhin wird durch das erste Filter auch ein Teil der von der durchströmenden Luft im Wasserbad aufgenommenen Feuchtigkeit und Aerosole aufgenommen. Dies wird dadurch begünstigt, dass Keramikfilter im allgemeinen ein hydrophiles Benetzungsverhalten aufweisen.

Vorzugsweise wird als erstes Keramikfilter ein offenporiges Keramikschaumfilter verwendet. Dieses hat in vorteilhafter Weise einen das Filtermaterial umgebenden polymeren Rahmen und kann aus dem Gerät herausgenommen und in einer Spülmaschine gereinigt werden. Der polymere Rahmen verhindert dabei ein Abstoßen und Abbröseln der Keramikmasse.

Ist die Vakuumpumpe im Ausgangskanal zwischen den beiden Keramikfiltern angeordnet, dann werden auch in der Vakuumpumpe erzeugte Partikel ausgefiltert.

Eine Verwendung mehrerer und wellig ausgestatteter Keramikschichten, wie sie im Anspruch 7 angegeben sind, verbessert die Filterwirkung. Eine planare Ausgestaltung der Keramik schichten erleichtert den Aufbau und die Beheizung des Filters.

Ein Reinigungsgerät gemäß der Erfindung kann in vorteilhafter Weise ein Multifunktions-Reinigungsgerät mit mehreren Betriebsarten sein. In einer dieser Betriebsarten arbeitet das Gerät mit einer aufgesetzten Düsen-/Schlaucheinheit als Staubsauger, in einer weiteren Betriebsart bei entfernter Düsen-/Schlaucheinheit als Luftreiniger.

Ist im Eingangskanal des Wasserbehälters ein Vorfilter angeordnet, dann ist sichergestellt, dass grobe Partikel, wie beispielsweise Blätter oder andere den Strömungskanal beeinträchtigende Gegenstände schon vor dem Wasserbad ausgefiltert werden. Dieses Vorfilter kann als leicht herausnehmbares Funktionselement im Düsenhalterungsbereich des Gerätes angeordnet sein. Das Vorfilter kann nach dem Herausnehmen in einfacher Weise mechanisch gereinigt oder ausgewaschen werden.

Ein Reinigungsgerät gemäß der Erfindung kann auch ein Klimatisierungsgerät sein, welches ein mit einer Heizvorrichtung ausgestattetes Keramikfilter aufweist.

Weitere vorteilhafte Eigenschaften der Erfindung ergeben sich aus deren beispielhafter Erläuterung anhand der Figuren. Es zeigt:
- Figur 1: ein Blockdiagramm eines ersten Ausführungsbei- spiels für ein Reinigungsgerät gemäß der Erfin- dung,
- Figur 2: ein Blockdiagramm eines zweiten Ausführungsbei- spiels für ein Reinigungsgerät gemäß der Erfin- dung, und
- Figur 3: ein Blockschaltbild eines dritten Ausführungsbei- spiels für ein Reinigungsgerät gemäß der Erfin- dung.

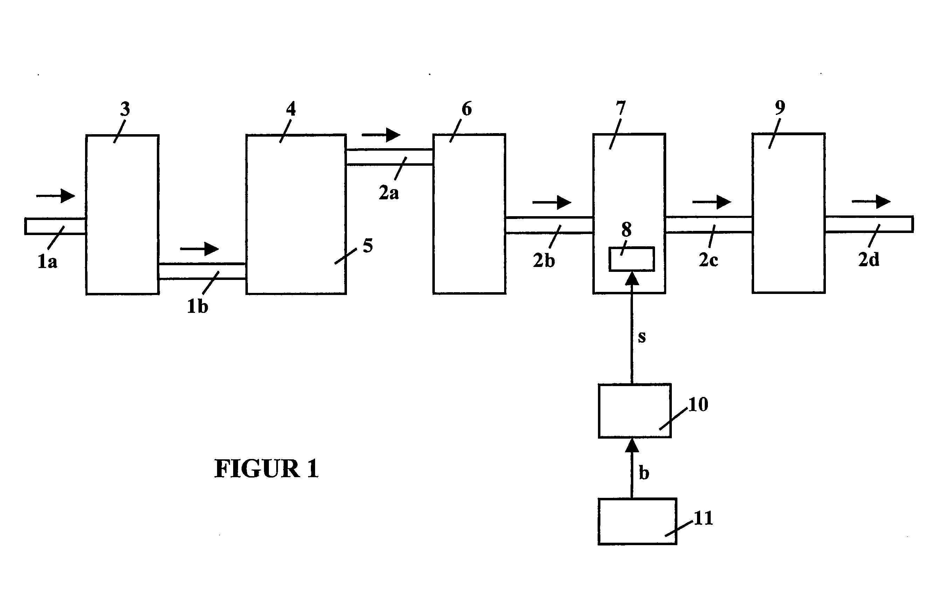

Die Figur 1 zeigt ein Blockdiagramm eines ersten Ausführungsbeispiels für ein Reinigungsgerät gemäß der Erfindung. Bei diesem Reinigungsgerät handelt es sich vorzugsweise um ein Multifunktions-Reinigungsgerät, welches in verschiedenen Betriebsarten betreibbar ist. Eine erste Betriebsart ist ein Staubsaugerbetrieb, bei welchem an den Eingang des in Figur 1 dargestellten Gerätes ein Düsen-/Schlauchsystem angeschlossen ist. Eine zweite Betriebsart ist ein Luftwäscherbetrieb, bei welchem das Gerät ohne angeschlossenes Düsen-/Schlauchsystem betrieben wird.

Das in der Figur 1 dargestellte Reinigungsgerät weist als zentrales Reinigungselement ein in einem Wasserbehälter 4 befindliches Wasserbad 5 auf. In diesen Wasserbehälter ist ein Eingangskanal 1a, 1b geführt, durch welchen angesaugte Luft in das Wasserbad geleitet wird.

Im Eingangskanal 1a, 1b ist ein Vorfilter 3 angeordnet, dessen Aufgabe im wesentlichen darin besteht, größere Partikel wie beispielsweise Blätter und andere den Strömungskanal beeinträchtigende Gegenstände auszufiltern. Dieses Vorfilter besteht aus einem Polymergewebe und ist so ausgestaltet, dass es leicht aus dem Gerät herausgenommen und mechanisch gereinigt oder abgewaschen werden kann. Gemäß einer vorteilhaften Ausgestaltung ist dieses Vorfilter in den Düsenhalterungsbereich des Gerätes eingesetzt, so dass es leicht zugänglich ist.

Der dem Wasserbehälter 4 zugeführte belastete Luftstrom durchströmt das Wasserbad 5, in welchem bereits ein Großteil der im belasteten Luftstrom enthaltenen Staubpartikel, Keime und weiteren organischen und anorganischen Substanzen sowie gegebenenfalls darin enthaltene lösliche Inhaltsstoffe zurückgehalten werden. Der an der Oberseite des Wasserbades 5 austretende Luftstrom wird an einen aus dem Wasserbehälter geführten Ausgangskanal 2a, 2b, 2c, 2d weitergegeben.

Die Filterwirkung des Wasserbades 5 beruht darauf, dass die im Luftstrom enthaltenen Partikel einen für eine Bindung ausreichenden Wasserkontakt erfahren. Um die gewünschte Bindung zu erreichen, kann eine Zentrifugalbeschleunigung der Luft vorgenommen und eine Wiederaufteilung koaliszierter Luftblasen durchgeführt werden.

Bei dieser Luftwäsche im Wasserbad 5 spielt die Benetzbarkeit von Partikeln und die Wasserlöslichkeit von adsorbierten Substanzen eine wichtige Rolle. Besonderes Augenmerk muss auf die Intensität der Luftwäsche und die Rückhaltung von Aerosolen gelegt werden.

Die Koaleszenz von kleinen in das Wasser eingebrachten Luftbläschen ist stark. Hydrophobe Partikel, beispielsweise Pollen, werden kaum benetzt und können das Wasserbad in vielen Fällen direkt passieren. Die Benetzung kann grundsätzlich durch einen geringen Zusatz von einem die Benetzung fördernden Medium, beispielsweise Alkohol oder Spiritus, deutlich verbessert werden. Nicht benetzte oder in zu großen Luftblasen passierende Partikel erfahren im Wasserbad eine bestimmte Befeuchtung und werden an den aus dem Wasserbehälter geführten Ausgangskanal 2a, 2b, 2c, 2d weitergegeben.

Im Ausgangskanal 2a, 2b, 2c, 2d sind ein erstes Keramikfilter 6, ein hinter diesem angeordnetes zweites Keramikfilter 7 und eine Vakuumpumpe 9 vorgesehen, wobei mittels der Vakuumpumpe der für das Fließen des Luftstromes erforderliche Unterdruck erzeugt wird.

Das erste Keramikfilter 6 ist ein adsorptiv wirkendes Filter, dessen Aufgabe im wesentlichen darin besteht, das Wasserbad passierende größere Teilchen und Tröpfchen zurückzuhalten, die das nachfolgende zweite Keramikfilter 7 in seiner Funktion beeinträchtigen könnten. Zudem nimmt das erste Keramikfilter 6 auch einen Teil der von der durchströmten Luft im Wasserbad aufgenommenen Feuchtigkeit und Aerosole auf. Dies wird durch das hydrophile Benetzungsverhalten des Keramikfilters begünstigt.

Das erste Keramikfilter 6 besteht aus Keramikschaum und hat deshalb eine große innere Oberfläche. Das Filtermaterial, bei dem es sich um Aluminiumoxid handelt, ist von einem polymeren Rahmen umgeben. Dadurch kann das erste Keramikfilter 6 zu Reinigungszwecken problemlos aus dem Reinigungsgerät herausgenommen und in eine Spülmaschine gebracht werden. Der polymere Rahmen verhindert dabei ein Abstoßen und Abbröseln der Keramikmasse.

Der vom ersten Keramikfilter 6 ausgegebene, von größeren Teilchen und Tröpfchen befreite Luftstrom wird an das zweite Keramikfilter 7 geführt. Dieses zweite Keramikfilter 7 weist eine definierte Ausschlussgrenze auf, die höchstens 10 Mikrometer beträgt und vorzugsweise im Bereich von 1 Mikrometer liegt. Alle im Luftstrom enthaltenen Teilchen, die größer als die Ausschlussgrenze dieses zweiten Keramikfilters sind, werden durch das zweite Keramikfilter 7 ausgefiltert, d. h. zurückgehalten. Das zweite Keramikfilter 7 weist mehrere parallel zueinander angeordnete Keramikschichten auf, die entweder planar oder wellig ausgebildet sind.

Zu den im zweiten Keramikfilter 7 zurückgehaltenen Teilchen gehören auch Keime und die oben genannten allergieauslösenden Stoffe wie Proteine, Proteinbestandteile und Elektrolyte.

Da sich derartige organische Stoffe in dem vorhandenen feuchten Milieu besonders gut weiterentwickeln können und da Keime auch durch Poren wandern können, deren Durchmesser deutlich kleiner ist als der Durchmesser der Keime, erfolgt erfindungsgemäß eine Sterilisation der hinter dem Wasserbad angeordneten Filtervorrichtung.

Diese Sterilisation erfolgt unter Verwendung eines Heizelementes 8, welches im zweiten Keramikfilter 7 angeordnet ist. Um die Sterilisierung durchzuführen, wird das zweite Keramikfilter 7 mittels des Heizelementes 8 auf eine Temperatur aufgeheizt, die im Bereich von 500°C liegt. Die Sterilisation wird beispielsweise vor oder nach jedem Gebrauch des Gerätes vorgenommen. Vorzugsweise erfolgt dies automatisch als Reaktion auf eine Betätigung des Einschalt- und/ oder Ausschaltknopfes 11 des Gerätes.

Diese Betätigung des Einschalt- und/oder Ausschaltknopfes 11 des Gerätes wird in Form eines über eine Verbindung b geleiteten Bedienbefehles einer Steuereinheit 10 signalisiert, die vorzugsweise als Mikrocomputer ausgebildet ist. Die Steuereinheit 10 generiert als Reaktion auf das Ein- oder Ausschalten des Gerätes einen Steuerbefehl, der über die Verbindung s dem Heizelement 8 zugeführt wird, um das zweite Keramikfilter 7 zum Zwecke einer Sterilisation aufzuheizen.

Durch dieses Aufheizen werden die oben genannten organischen Partikel verascht. Die dabei entstehenden Aschepartikel, die keine allergieauslösenden Bestandteile aufweisen, werden als Bestandteil des Luftstromes aus dem zweiten Keramikfilter 7 abgesaugt.

Zusätzlich oder alternativ zu einer Sterilisation beim Ein- und Ausschalten des Gerätes kann eine Sterilisation auch automatisch nach Ablauf vorgegebener Zeitintervalle erfolgen. Zu diesem Zweck ist die Steuereinheit 10 mit einer Timerfunktion bzw. mit einem Betriebsstundenzähler versehen. Beispielsweise kann stets nach Ablauf von drei Betriebsstunden des Gerätes von der Steuereinheit 10 ein den Aufheizvorgang auslösendes Steuersignal über die Verbindung s an das Heizelement 8 gegeben werden.

Die Zeitdauer des Aufheizvorganges beträgt beispielsweise 1 Minute. Nach Ablauf dieser Zeit wird die Heizung 8 von der Steuereinheit 10 wieder automatisch deaktiviert.

Durch diese Möglichkeit einer automatisch erfolgenden thermischen Reinigung eines Keramikfilters, welches die erforderlichen hohen Temperaturen ohne weiteres verkraftet, wird der Wartungsaufwand für den Benutzer wesentlich reduziert. Da die im zweiten Keramikfilter 7 hängen gebliebenen Partikel stets nach kurzer Betriebszeit des Gerätes verascht und die dabei entstehenden Aschepartikel ausgeschieden werden, bleibt das Durchlassverhalten des zweiten Keramikfilters 7 auch nach langer Betriebszeit des Gerätes weitgehend konstant, was eine wichtige Vorraussetzung für die praktische Verwendbarkeit eines Filters mit Porengrößen im oben genannten Mikrometerbereich ist. Allergieauslösende organische Partikel und Keime werden durch die beschriebene Sterilisation beseitigt.

Folglich wird durch die Erfindung ein kostengünstiges, steriles, auch für Allergiker geeignetes Reinigungsgerät zur Verfügung gestellt, dessen dem Wasserbad nachgeschaltete Filter Dauerfilter sind, einen stark reduzierten Wartungsaufwand haben und Mikroorganismen sicher zurückhalten.

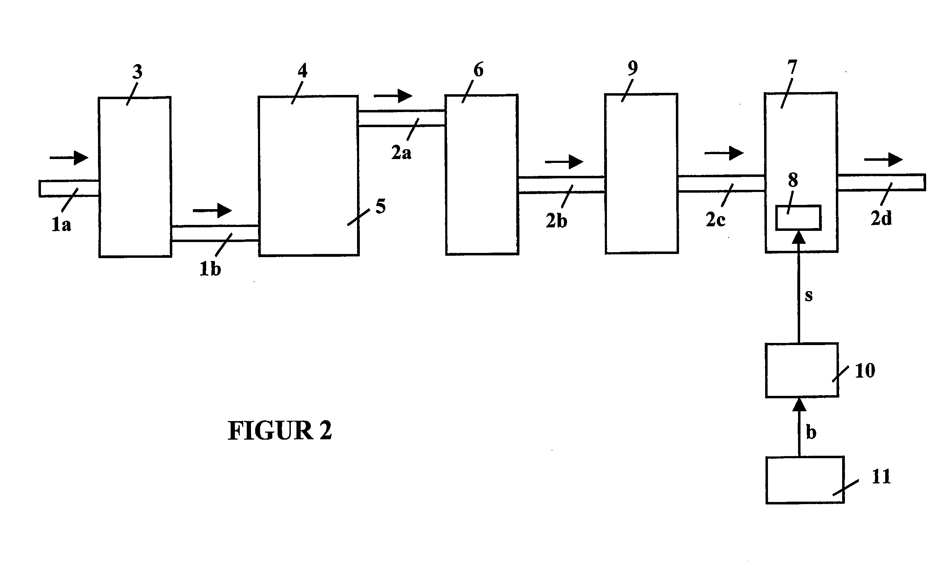

Die Figur 2 zeigt ein Blockdiagramm eines zweiten Ausführungsbeispiels für ein Reinigungsgerät gemäß der Erfindung. Dieses unterscheidet sich von dem in der Figur 1 gezeigten ersten Ausführungsbeispiel lediglich dadurch, dass die Vakuumpumpe 9 zwischen dem ersten Keramikfilter 6 und dem zweiten Keramikfilter 7 angeordnet ist. Der Vorteil dieser Ausführungsform besteht darin, dass auch in der Vakuumpumpe erzeugte Partikel vom Filter 7 ausgefiltert und folglich nicht an die Umgebung abgegeben werden.

Vorstehend wurde die Erfindung anhand der in den Figuren 1 und 2 gezeigten Ausführungsbeispiele näher erläutert. Gemäß weiterer, in den Figuren nicht dargestellter Ausführungsformen der Erfindung kann beispielsweise das Vorfilter 3 weggelassen werden, auch das erste Keramikfilter mit einer Heizung zur Sterilisation des Filters ausgestattet und auch statt der Vakuumpumpe mit einem Gebläse gearbeitet werden.

Eine vorteilhafte Ausgestaltung des erfindungsgemäßen Reinigungsgerätes besteht darin, dieses mit einem Schadstoffsensor auszustatten. Dieser misst die momentan vorliegende Belastung der Luft mit Formaldehyden, Zigarettenrauch, usw., und zeigt den gemessenen Schadstoffgehalt unter Verwendung einer optischen Anzeige, beispielsweise einer LED-Kette, an. Dieser Schadstoffsensor ist beispielsweise in dem Übergangsbereich zwischen dem Düsen-/Schlauchsystem und dem Eingangskanal 1a des Wasserbehälters angeordnet. Der Schadstoffsensor ist im Staubsaugerbetrieb deaktiviert und nur im Luftreinigungsbetrieb aktiv. Die Deaktivierung des Schadstoffsensors im Staubsaugerbetrieb wird dadurch erreicht, dass beim Aufstecken des Düsen-/Schlauchsystems automatisch ein den Schadstoffsensor deaktivierendes Kontaktelement betätigt wird. Wird das Düsen-/Schlauchsystem zur Durchführung eines Luftreinigungsbetriebes abgenommen, dann wird das Kontaktelement erneut betätigt und dadurch der Schadstoffsensor wieder aktiviert.

In einer weiteren Betriebsart des Reinigungsgerätes wird dieses als Nassreinigungsgerät verwendet. Diese Nassreinigung erfolgt unter Verwendung eines als Steckmodul realisierten Hydroelektromoduls. Beim Aufstecken des Moduls auf das Gerät wird automatisch der benötigte elektrische Kontakt und der Nassschlauchverbindungskontakt hergestellt. In dieser Nassreinigungsbetriebsart können beispielsweise Bodenbeläge, Teppichböden, Polster jeglicher Art oder Fenster nass gereinigt werden, wobei in einem ersten Schritt die Reinigungsflüssigkeit, beispielsweise mit einem Reinigungszusatz versetztes Wasser, auf das zu reinigende Medium aufgesprüht und in einem zweiten Schritt zusammen mit den entfernten Schmutzpartikeln wieder abgesaugt wird.

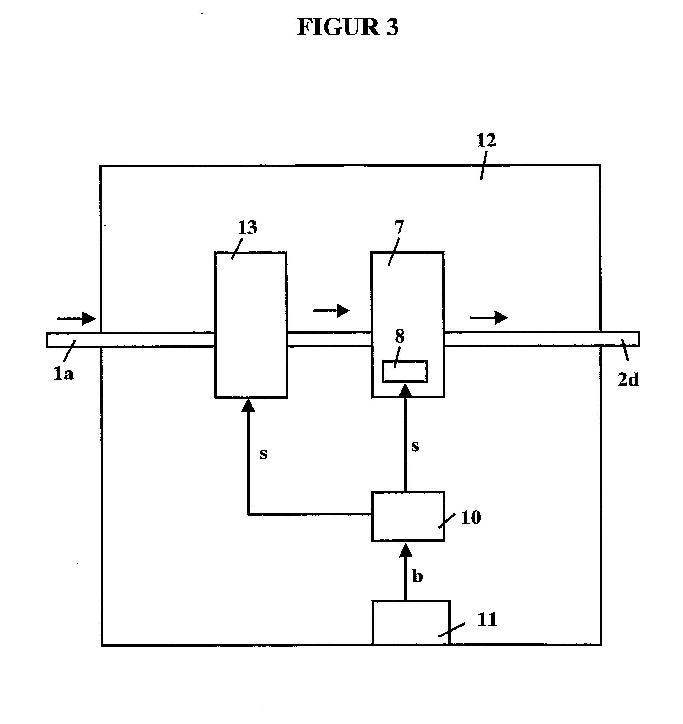

Die Figur 3 zeigt ein Blockschaltbild eines dritten Ausführungsbeispiels für ein Reinigungsgerät gemäß der Erfindung. Bei diesem Reinigungsgerät handelt es sich um ein Klimatisierungsgerät 12, wie es in geschlossenen Räumen zur Einstellung einer gewünschten Raumtemperatur verwendet wird. Dieses Klimatisierungsgerät, mittels dessen ein über einen Eingangskanal 1a eintretender Luftstrom in einem Temperaturregler 13 erwärmt oder abgekühlt wird, enthält erfindungsgemäß eine Filtervorrichtung, die ein mit einer Heizvorrichtung 8 ausgestattetes Keramikfilter 7 aufweist. Der Porendurchmesser dieses Keramikfilters ist kleiner als 10 Mikrometer.

Im Betrieb des Klimatisierungsgerätes bleiben im Keramik-filter allergieauslösende Partikel hängen. Diese werden durch eine thermische Sterilisation des Keramikfilters 7 unter Verwendung der Heizvorrichtung 8 verascht und in Form kleinster Aschepartikel ausgeschieden, die keine allergieauslösenden Bestandteile enthalten. Der Heizvorgang wird durch eine Steuereinheit 10 gesteuert, die entweder nach Betätigung einer Ein- oder Ausschalttaste 11 des Gerätes oder in vorgesehenen Betriebszeitabständen die Heizvorrichtung 8 zur thermischen Sterilisation des Keramikfilters 7 aktiviert. Der aus dem Keramikfilter 7 austretende Luftstrom wird über den Ausgangskanal 2d an den jeweiligen Raum abgegeben.

Eine Filtervorrichtung, die ein mit einer Heizvorrichtung 8 ausgestattetes Keramikfilter 7 aufweist, wobei der Porendurchmesser des Keramikfilters kleiner ist als 10 Mikrometer und wobei die Heizvorrichtung zur thermischen Sterilisation des Keramikfilters vorgesehen ist, kann im Sinne eines Ersatzteilgeschäftes auch unabhängig von einem Reinigungsgerät vertrieben und zum Ersatz von defekten Filtern oder zum Einbau in andere Geräte verwendet werden.

### Bezugszeichenliste:

- 1a, 1b: Eingangskanal
- 2a,2b,2c,2d: Ausgangskanal
- 3: Vorfilter
- 4: Wasserbehälter
- 5: Wasserbad
- 6: Erstes Keramikfilter
- 7: Zweites Keramikfilter
- 8: Heizung
- 9: Vakuumpumpe
- 10: Heizungssteuerung
- 11: Bedienknopf
- 12: Klimatisierungsgerät
- 13: Temperaturregler
- b: Verbindung zur Übertragung eines Bediensignals
- s: Verbindung zur Übertragung eines Steuersignals

## Patentansprüche

1. Reinigungsgerät, welches einen Wasserbehälter (4), einen in den Wasserbehälter geführten Eingangskanal (1a, 1b), einen aus dem Wasserbehälter geführten Ausgangskanal (2a, 2b, 2c, 2d) und eine im Ausgangskanal angeordnete Filtervorrichtung (6, 7) enthält,
**dadurch gekennzeichnet, dass**
die Filtervorrichtung ein mit einer Heizvorrichtung (8) ausgestattetes Keramikfilter aufweist, wobei der Porendurchmesser des Keramikfilters kleiner ist als 10 Mikrometer und wobei die Heizvorrichtung (8) zur thermischen Sterilisation des Keramikfilters (7) durch Erhitzung des Keramikfilters auf mindestens 500°C vorgesehen ist.

2. Reinigungsgerät nach Anspruch 1,
**dadurch gekennzeichnet, dass** die Filtervorrichtung zwei hintereinander angeordnete Keramikfilter (6, 7) aufweist.

3. Reinigungsgerät nach Anspruch 2,
**dadurch gekennzeichnet, dass** das erste im Ausgangskanal (2a, 2b, 2c, 2d) angeordnete Keramikfilter (6) ein Adsorptionsfilter ist, welches zur Ausfilterung von gröberen Teilchen und Tröpfchen vorgesehen ist, und das zweite im Ausgangskanal angeordnete Keramikfilter das mit der Heizvorrichtung (8) ausgestattete Keramikfilter (7) ist.

4. Reinigungsgerät nach Anspruch 3,
**dadurch gekennzeichnet, dass** das erste im Ausgangskanal angeordnete Keramikfilter (6) ein Keramikschaumfilter ist.

5. Reinigungsgerät nach Anspruch 4,
**dadurch gekennzeichnet, dass** das erste im Ausgangskanal angeordnete Keramikfilter (6) Aluminiumoxid als Filtermaterial aufweist.

6. Reinigungsgerät nach Anspruch 4 oder 5,
**dadurch gekennzeichnet, dass** das erste im Ausgangskanal angeordnete Keramikfilter (6) einen aus Polymermaterial bestehenden Rahmen aufweist,

7. Reinigungsgerät nach einem der vorhergehenden Ansprüche, **dadurch gekennzeichnet, dass** das mit der Heizvorrichtung (8) ausgestattete Keramikfilter (7) mehrere planar oder wellig verlaufende Keramikschichten aufweist.

8. Reinigungsgerät nach einem der Ansprüche 2 - 7, **dadurch gekennzeichet,** das s es eine Vakuumpumpe (9) aufweist, die im Ausgangskanal zwischen den beiden Keramikfiltern angeordnet ist.

9. Reinigungsgerät nach einem der Ansprüche 2 bis 7, **dadurch gekennzeichnet, dass** es eine Vakuumpumpe (9) aufweist, die im Ausgangskanal hinter den beiden Keramikfiltern angeordnet ist.

10. Reinigungsgerät nach einem der vorhergehenden Ansprüche,
**dadurch gekennzeichnet, dass** die Heizvorrichtung (8) mit einer Steuereinheit (10) verbunden ist.

11. Reinigungsgerät nach Anspruch 10,
**dadurch gekennzeichnet,** das s die Steuereinheit (10) die Heizvorrichtung (8) bei einem Betätigen des Ein- und/oder Ausschaltknopfes (11) des Reinigungsgerätes automatisch aktiviert.

12. Reinigungsgerät nach Anspruch 10 oder 11,
**dadurch gekennzeichnet, dass** die Steuereinheit (10) die Heizvorrichtung (8) automatisch in vorgegebenen Betriebszeitabständen aktiviert.

13. Reinigungsgerät nach einem der vorhergehenden Ansprüche,
**dadurch gekennzeichnet, dass** es ein Multifunktions-Reinigungsgerät ist, welches in verschiedenen Betriebsarten betreibbar ist.

14. Reinigungsgerät nach Anspruch 13,
**dadurch gekennzeichnet, dass** eine erste Betriebsart ein Staubsaugerbetrieb und eine zweite Betriebsart ein Luftreinigungsbetrieb ist.

15. Reinigungsgerät nach einem der vorhergehenden Ansprüche, **dadurch gekennzeichnet, dass** es ein im Eingangskanal (1a, 1b) angeordnetes Vorfilter (3) aufweist.

16. Reinigungsgerät nach Anspruch 15,
**dadurch gekennzeichnet, dass** das Vorfilter (3) aus Polymergewebe besteht.

17. Reinigungsgerät nach Anspruch 1,
**dadurch gekennzeichnet, dass** es ein Klimatisierungsgerät ist.

18. Reinigungsgerät nach einem der vorhergehenden Ansprüche, **dadurch gekennzeichnet, dass** es einen Schadstoffsensor und eine optische Anzeige zur Anzeige des gemessenen Schadstoffgehaltes aufweist.

## Claims

1. Cleaning apparatus which includes a water container (4), an inlet channel (1a, 1 b) led into the water container, an outlet channel (2a, 2b, 2c, 2d) led out of the water container and a filter device (6, 7) arranged in the outlet channel, **characterised in that** the filter device comprises a ceramic filter equipped with a heating device (8), wherein the pore diameter of the ceramic filter is less than 10 microns and wherein the heating device (8) is provided for thermal sterilisation of the ceramic filter (7) by heating the ceramic filter to at least 500° C.

2. Cleaning apparatus according to claim 1, **characterised in that** the filter device comprises two ceramic filters (6, 7) arranged one behind the other.

3. Cleaning apparatus according to claim 2, **characterised in that** the first ceramic filter (6) arranged in the outlet channel (2a, 2b, 2c, 2d) is an adsorption filter which is provided for filtering out coarser particles and droplets and the second ceramic filter arranged in the outlet channel is the ceramic filter (7) equipped with the heating device (8).

4. Cleaning apparatus according to claim 3, **characterised in that** the first ceramic filter (6) arranged in the outlet channel is a ceramic foam filter.

5. Cleaning apparatus according to claim 4, **characterised in that** the first ceramic filter (6) arranged in the outlet channel comprises aluminium oxide as filter material.

6. Cleaning apparatus according to claim 4 or 5, **characterised in that** the first ceramic filter (6) arranged in the outlet channel comprises a frame consisting of polymer material.

7. Cleaning apparatus according to any one of the preceding claims, **characterised in that** the ceramic filter (7) equipped with the heating device (8) comprises several ceramic layers which extend planarly or in wavy manner.

8. Cleaning apparatus according to any one of claims 2 to 7, **characterised in that** it comprises a vacuum pump (9) which is arranged in the outlet channel between the two ceramic filters.

9. Cleaning apparatus according to any one of claims 2 to 7, **characterised in that** it comprises a vacuum pump (9) which is arranged in the outlet channel behind the two ceramic filters.

10. Cleaning apparatus according to any one of the preceding claims, **characterised in that** the heating device (8) is connected with a control unit (10).

11. Cleaning apparatus according to claim 10, **characterised in that** the control unit (10) automatically activates the heating device (8) on actuation of the switch-on and/or switch-off button (11) of the cleaning apparatus.

12. Cleaning apparatus according to claim 10 or 11, **characterised in that** the control unit (10) automatically activates the heating device (8) at predetermined operating time intervals.

13. Cleaning apparatus according to any one of the preceding claims, **characterised in that** it is a multi-function cleaning apparatus operable in different operating modes.

14. Cleaning apparatus according to claim 13, **characterised in that** a first operating mode is a vacuum cleaner operation and a second operating mode is an air cleaning operation.

15. Cleaning apparatus according to any one of the preceding claims, **characterised in that** it comprises a pre-filter (3) arranged in the inlet channel (1a, 1b).

16. Cleaning apparatus according to claim 15, **characterised in that** the pre-filter (3) consists of polymer fabric.

17. Cleaning apparatus according to claim 1, **characterised in that** it is an air conditioning apparatus.

18. Cleaning apparatus according to any one of the preceding claims, **characterised in that** it comprises a noxious substance sensor and an optical indicator for indicating the measured noxious substance content.

## Revendications

1. Appareil épurateur qui comporte un réservoir d'eau (4), un canal d'entrée (1a, 1b) s'étendant jusque dans le réservoir d'eau, un canal de sortie (2a, 2b, 2c, 2d) s'étendant hors du réservoir d'eau et un dispositif de filtrage (6, 7) agencé au niveau du canal de sortie,
**caractérisé en ce que**
le dispositif de filtrage présente un filtre céramique équipé d'un dispositif de chauffage (8), le diamètre des pores du filtre céramique étant inférieur à 10 micromètres et le dispositif de chauffage (8) étant prévu pour la stérilisation thermique du filtre céramique (7) par chauffage du filtre céramique à au moins 500°C.

2. Appareil épurateur selon la revendication 1,
**caractérisé en ce que** le dispositif de filtrage présente deux filtres céramiques agencés l'un derrière l'autre (6, 7).

3. Appareil épurateur selon la revendication 2,
**caractérisé en ce que** le premier filtre céramique (6) agencé dans le canal de sortie (2a, 2b , 2c, 2d) est un filtre d'adsorption qui est prévu pour l'extraction par filtration de particules et gouttelettes plus grossières et le deuxième filtre céramique agencé dans le canal de sortie est le filtre céramique (7) équipé du dispositif de chauffage (8).

4. Appareil épurateur selon la revendication 3,
**caractérisé en ce que** le premier filtre céramique (6) agencé dans le canal de sortie est un filtre en mousse de céramique.

5. Appareil épurateur selon la revendication 4,
**caractérisé en ce que** le premier filtre céramique (6) agencé dans le canal de sortie a de l'oxyde d'aluminium comme matériau filtrant.

6. Appareil épurateur selon la revendication 4 ou 5,
**caractérisé en ce que** le premier filtre céramique (6) agencé dans le canal de sortie présente un cadre en matériau polymère.

7. Appareil épurateur selon l'une quelconque des revendications précédentes, **caractérisé en ce que** le filtre céramique (7) équipé du dispositif de chauffage (8) présente plusieurs couches céramiques planes ou ondulées.

8. Appareil épurateur selon l'une quelconque des revendications 2 à 7,
**caractérisé en ce qu'**il présente une pompe à vide (9) qui est agencée dans le canal de sortie entre les deux filtres céramiques.

9. Appareil épurateur selon l'une quelconque des revendications 2 à 7,
**caractérisé en ce qu'**il présente une pompe à vide (9) qui est agencée dans le canal de sortie derrière les deux filtres céramiques.

10. Appareil épurateur selon l'une quelconque des revendications précédentes, **caractérisé en ce que** le dispositif de chauffage (8) est relié à une unité de commande (10).

11. Appareil épurateur selon la revendication 10,
**caractérisé en ce que** l'unité de commande (10) active automatiquement le dispositif de chauffage (8) lors d'un actionnement du bouton marche et/ou arrêt (11) de l'appareil épurateur.

12. Appareil épurateur selon la revendication 10 ou 11,
**caractérisé en ce que** l'unité de commande (10) active automatiquement le dispositif de chauffage (8) à des intervalles de fonctionnement prédéfinis.

13. Appareil épurateur selon l'une quelconque des revendications précédentes, **caractérisé en ce qu'**il s'agit d'un appareil épurateur multifonction qui peut être exploité dans différents modes de service.

14. Appareil épurateur selon la revendication 13,
**caractérisé en ce qu'**un premier mode de service est un mode aspiration et un deuxième mode de service est un mode épuration d'air.

15. Appareil épurateur selon l'une quelconque des revendications précédentes, **caractérisé en ce qu'**il présente un préfiltre (3) agencé dans le canal d'entrée (1a, 1b).

16. Appareil épurateur selon la revendication 15,
**caractérisé en ce que** le préfiltre (3) est en tissu polymère.

17. Appareil épurateur selon la revendication 1,
**caractérisé en ce qu'**il s'agit d'un appareil de climatisation.

18. Appareil épurateur selon l'une quelconque des revendications précédentes, **caractérisé en ce qu'**il présente un détecteur de substances nocives et un affichage optique pour afficher la teneur mesurée en substances nocives.
